# FASCICULE DE BREVET EUROPEEN

(11) **EP 3 364 564 B1**
(45) Date de publication et mention de la délivrance du brevet: **29.04.2020**
(21) Numéro de dépôt: 18156171.3
(22) Date de dépôt: 09.02.2018
(51) Int. Cl.: H04B 10/114, H04B 10/116

(54) **DISPOSITIF DE COMMUNICATION OPTIQUE POUR VÉHICULES AUTOMOBILES**
OPTISCHE KOMMUNIKATIONSVORRICHTUNG FÜR FAHRZEUGE
OPTICAL COMMUNICATION SYSTEM FOR VEHICLES

(30) Priorité: 17.02.2017 FR 1751277
(43) Date de publication de la demande: 22.08.2018
(73) Titulaire: Valeo Vision, 93012 Bobigny Cedex (FR)
(72) Inventeur: COURCIER, Marine, 85774 Unterfoehring (DE); BEEV, Kostadin, 93012 BOBIGNY Cedex (FR); SANCHEZ, Vanesa, 93012 BOBIGNY Cedex (FR); ALBOU, Pierre, 93012 BOBIGNY Cedex (FR); HUE, David, 93012 BOBIGNY Cedex (FR)
(74) Mandataire: Valeo Vision

(56) Documents cités:
- EP-A1- 1 515 292
- US-A1- 2006 269 293
- US-B1- 6 310 707

## Description

La présente invention concerne un dispositif de communication, notamment pour véhicules automobiles.

Dans le monde de l'automobile, on a souvent cherché à fournir des dispositifs de communication entre véhicules qui permettent de donner aux autres des indications sur les intentions ou la façon de conduire d'un conducteur. Ainsi, il existe communément des dispositifs de signalisation qui permettent aux autres véhicules d'anticiper le comportement d'un véhicule, comme le clignotant par exemple, qui montre que le conducteur du véhicule veut tourner, ou les feux spécifiques de freinage qui s'allument pour prévenir d'une situation d'urgence.

Ces moyens sont cependant très limités, car ils sont uniquement basés sur des informations visuelles de couleur ou de rythme d'allumage. Ainsi, pour améliorer la sécurité et le comportement des véhicules sur les routes, on veut aujourd'hui augmenter la capacité de transfert d'informations entre véhicules, et avoir de réels systèmes de communications pour véhicules.

On connait par exemple le document US2006/0119489, dans lequel des dispositifs de communication pour véhicules utilisent les feux usuels du véhicule ou des feux de signalisation des équipements de circulation. Pour transférer des informations, la lumière émise par le feu est modulée dans un mode pulsé. Autrement dit, le feu est commuté alternativement d'un état éteint à un état allumé, de manière à pouvoir coder des informations. La période de modulation est choisie plus courte que la persistance rétinienne, pour que la modulation ne soit pas perçue par l'œil humain. Un véhicule est muni d'un détecteur qui décode la modulation pulsée du signal lumineux pour décoder et transférer les informations, par exemple au conducteur via un écran digital.

Cependant, l'utilisation de tels feux manque d'efficacité, notamment lorsque les sources lumineuses des feux sont des sources électroluminescentes, notamment des diodes électroluminescentes. En effet les diodes électroluminescentes perdent en efficacité, la raison étant que le flux de lumière d'une LED alimentée par un courant moyen en mode pulsé, le courant pic étant relativement élevé, est inférieur au flux de lumière de la même LED alimentée par le même courant moyen en mode continu .

Une source lumineuse électroluminescente est une source comprenant au moins un matériau émettant de la lumière en réponse à un courant électrique qui le traverse, ou à un fort champ électrique. De telles sources sont par exemple les diodes électroluminescentes, les OLED (de l'anglais pour « organic light emitting diodes), des PLED (de l'anglais pour « polymer light emitting diodes).

D'autres systèmes émetteur-récepteur envisagés sont basés sur l'utilisation d'ondes radiofréquences pour transmettre des informations. Cependant, il est nécessaire d'installer des émetteurs et récepteurs spécifiques dans les véhicules, ce qui est coûteux. En outre, il est difficile de distinguer de quel véhicule proviennent les ondes radiofréquences.

Le but de l'invention est de remédier à ces inconvénients, et vise à fournir un dispositif de communication simple à agencer dans un véhicule, et efficace dans la transmission d'informations entre véhicules. Plus précisément, on veut éviter d'avoir recours à une modulation de l'intensité lumineuse, qui induit des variations de flux de lumière en fonction des données échangées.

Pour cela, l'invention se rapporte à un dispositif de communication, notamment pour véhicules automobiles, comprenant un système d'émission muni d'une source lumineuse apte à émettre un faisceau de lumière initial, le système d'émission étant configuré pour générer un premier faisceau de lumière polarisée selon une première direction à partir du faisceau de lumière initial, le système d'émission comportant en outre un modulateur de la direction de polarisation du premier faisceau de lumière polarisée de manière à transmettre des informations, le dispositif comprenant en outre un système de réception configuré pour détecter ledit premier faisceau de lumière polarisée selon ladite première direction et à transmettre lesdites informations.

Ainsi, le faisceau de lumière polarisée modulé permet de transmettre facilement des informations, par exemple pour véhicules automobiles ou pour un véhicule et un équipement d'infrastructure routier. En effet, le système de réception détecte seulement le premier faisceau de lumière polarisée, lorsque celle-ci est polarisée dans la première direction. En modulant la direction de polarisation du premier faisceau, on peut transmettre des informations. L'intensité de l'éclairage du premier faisceau fourni par le système d'émission est sensiblement la même car seule la polarisation est modifiée.

Le dispositif peut notamment fonctionner avec des feux de véhicule usuels, comme source de lumière du système d'émission, pour éviter d'avoir recours à des sources de lumière supplémentaires. De plus, grâce à l'invention, on obtient à partir d'une seule source lumineuse, un faisceau d'éclairage ayant une fonction spécifique, par exemple un feu de type code, et des moyens pour transmettre des informations en utilisant le même faisceau de lumière initial.

Selon différents modes de réalisation de l'invention, qui pourront être pris ensemble ou séparément :
- le modulateur comporte un écran capable de moduler la polarisation du premier faisceau de lumière polarisée entre la première direction de polarisation et une deuxième direction de polarisation,
- la première et la deuxième direction de polarisation sont orthogonales,
- le modulateur comportent un écran à cristaux liquides commutable entre une première configuration dans laquelle le premier faisceau de lumière polarisée est transmis dans la première direction de polarisation, et une deuxième configuration dans laquelle le premier faisceau de lumière polarisée est transmis dans la deuxième direction de polarisation,
- le système d'émission comprend un séparateur linéaire configuré pour diviser le faisceau de lumière initiale pour former le premier faisceau de lumière polarisée et un deuxième faisceau de lumière polarisée dans la deuxième direction de polarisation,
- le système d'émission est configuré pour générer un faisceau d'éclairage à partir du faisceau de lumière initial,
- le système d'émission est configuré pour que le faisceau d'éclairage soit en partie formé par le premier faisceau de lumière polarisée quelle que soit sa direction de polarisation,
- le système d'émission est configuré pour recombiner le premier faisceau de lumière polarisée dans la première direction et le deuxième faisceau de lumière polarisée de manière à former le faisceau d'éclairage,
- le système d'émission comprend un deuxième séparateur configuré pour réfléchir le premier faisceau de lumière polarisée dans la première direction de polarisation, et transmettre le premier faisceau de lumière polarisée dans la deuxième direction,
- la source de lumière comprend une source lumineuse électroluminescente,
- la source lumineuse électroluminescente comprend au moins un élément émetteur à semi-conducteur,
- la source lumineuse est une source lumineuse non polarisée, telle une diode électroluminescente,
- la source lumineuse est une source lumineuse polarisée, telle une source laser,
- le système d'émission comprend un élément de conversion de longueur d'onde, de type photo-luminescent, agencé pour transformer le faisceau de lumière polarisée initial en faisceau de lumière non polarisé,
- le système de réception comprend un détecteur de lumière et un filtre polarisant configuré pour laisser passer la lumière polarisée selon la première direction.

L'invention se rapporte également à un système d'émission pour un tel dispositif de communication selon l'invention.

L'invention se rapporte encore à un dispositif lumineux, notamment pour véhicule automobile, comprenant un tel dispositif de communication.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre de façon schématique, un premier mode de réalisation d'un système d'émission d'un dispositif de communication selon l'invention,
- la figure 2 illustre de façon schématique, un deuxième mode de réalisation d'un système d'émission d'un dispositif de communication selon l'invention,
- la figure 3 illustre de façon schématique, un système de réception d'un dispositif de communication selon l'invention,
- la figure 4 illustre de façon schématique, la transmission d'informations lors du fonctionnement du dispositif.

L'invention porte sur un dispositif de communication comprenant un système d'émission et un système de réception. Le dispositif est par exemple agencé sur des véhicules automobiles, non représentés sur les figures, afin de transférer des informations d'un véhicule à un autre. En particulier, un système d'émission d'un véhicule est configuré pour transmettre des informations à un système de réception de l'autre véhicule, et réciproquement.

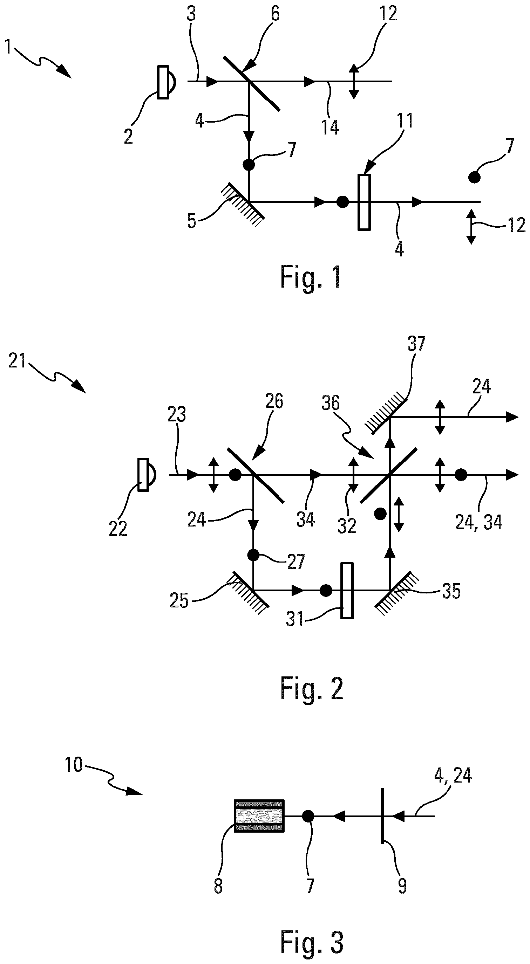

Comme illustré à la figure 1, le système d'émission 1 est muni d'une source lumineuse 2 apte à émettre un faisceau de lumière initial 3. Dans ce mode de réalisation, la source lumineuse 2 est une source de lumière non polarisée, telle une diode électroluminescente. La source lumineuse 2 est par exemple une source d'un feu de véhicule usuel, tel un feu de croisement.

Le système d'émission 1 est configuré pour générer un premier faisceau de lumière polarisée 4 selon une première direction 7 à partir du faisceau de lumière initial 3. Le faisceau polarisé dans la première direction 7 est représentée par un cercle plein. A cette fin, le système d'émission 1 comprend un séparateur 6, de préférence linéaire, configuré pour diviser le faisceau de lumière initiale 3 et former le premier faisceau de lumière polarisée 4. Le séparateur 6, qui est par exemple un polariseur, est agencé de préférence dans l'axe optique de la source de lumière 2. Ici, le séparateur 6 réfléchit la partie du faisceau de lumière initial 3 orientée dans la première direction, cette partie formant le premier faisceau de lumière polarisée 4, qui est dirigé ici sensiblement perpendiculairement à l'axe optique. Le système d'émission 1 comprend avantageusement un optique de collimation, non représenté sur les figures, disposé entre la source de lumière 2 et le séparateur 6. Un tel séparateur 6 comprend par exemple un polariseur à grille, ou un polariseur du type Glan-Thomson ou Wollaston, ou encore un prisme du type Nicol.

Dans d'autres modes de réalisation, on peut utiliser encore d'autres types de polariseur permettant d'obtenir une orientation des faisceaux polarisés autre que perpendiculaire et/ou parallèle à l'axe optique

Le système de réception 10, représenté sur la figure 3, est configuré pour détecter ledit premier faisceau de lumière polarisée 4, 24 selon ladite première direction 7 et à transmettre lesdites informations. Le système de réception 10 est muni d'un détecteur de lumière 8 et d'un filtre polarisant 9 configuré pour laisser passer la lumière polarisée orientée dans la première direction 7. Le filtre polarisant 9 est disposé devant le détecteur 8 pour que ce dernier ne détecte que le faisceau de lumière polarisée 4 dans ladite première direction 7.

Selon l'invention, le système d'émission 1 comporte également un modulateur 11 de la direction de polarisation du premier faisceau de lumière polarisée 4, comme le montre la figure 1. La modulation consiste à émettre le premier faisceau de lumière polarisée 4 dans la première direction 7 par intermittence de sorte que le détecteur détecte le premier faisceau 7 de façon fractionnée dans le temps, ce qui permet un codage des informations à transmettre par le système d'émission 1 et un décodage par le système de détection. De préférence, le modulateur 11 est capable modifier instantanément l'angle de polarisation du premier faisceau polarisé 4 de manière à pouvoir coder et transmettre des informations. Ainsi, lorsque le premier faisceau 4 est polarisé dans la première direction 7, le système de détection détecte le premier faisceau 4 et lorsque le premier faisceau est dirigé dans une deuxième direction 12, le système de détection ne détecte pas le premier faisceau polarisé 4. Les premières 7 et deuxième 12 directions sont avantageusement orthogonales pour bien les différencier, ce qui dépend du type de séparateur choisi. La deuxième direction 12 est représentée sur la figure par une double flèche.

Le modulateur 11 comporte ici un écran capable de moduler la polarisation du premier faisceau de lumière polarisée 4 entre ladite première direction 4 de polarisation et la deuxième direction 12 de polarisation. L'écran est par exemple un écran à cristaux liquides commutable entre une première configuration dans laquelle le premier faisceau de lumière polarisée 4 est transmis dans la première direction de polarisation 7, et une deuxième configuration dans laquelle le premier faisceau de lumière polarisée 4 est transmis dans la deuxième direction de polarisation 12. Dans la couche à cristaux-liquides de l'écran, la direction de la lumière polarisée peut-être modifiée par les cristaux liquides. En effet, lorsque les cristaux liquides sont disposés en couches chirales, ils transmettent le premier faisceau polarisé 4 en modifiant sa polarisation dans la deuxième direction 12. En revanche, lorsque les cristaux liquides sont orientés de façon isotrope dans la même direction, celle du champ électrique qui leurs est appliqué, ils transmettent le faisceau avec la même direction de polarisation, ici la première direction 7. Ainsi, l'orientation des cristaux-liquides détermine la direction de polarisation de la lumière.

Le modulateur est, par exemple, pourvu d'un dispositif de commande, non représenté sur les figures, agencé pour commander la commutation de l'écran d'une configuration à l'autre, et induire ainsi la modulation du premier faisceau lumineux 4. Le dispositif de commande est de plus configuré pour engendrer le codage desdites informations grâce à la modulation par l'écran. De plus, un miroir 5 est agencé ici pour réfléchir le premier faisceau de lumière polarisé 4 vers le modulateur 11 en sortie du séparateur 6.

Le système d'émission 1 est avantageusement configuré pour que le faisceau d'éclairage soit en partie formé par le premier faisceau de lumière polarisée 4, et ceci quelle que soit sa direction de polarisation. Le premier faisceau polarisé 4 est émis avec une intensité sensiblement constante, même lorsque sa polarisation est modulée. Ainsi, l'intensité émise du faisceau d'éclairage équivaut sensiblement à la somme des intensités du premier faisceau polarisé et du deuxième faisceau polarisé. Dans ce cas, le miroir 5 a en outre pour fonction de réaligner les premier 4 et deuxième 14 faisceaux afin qu'ils constituent ensemble au moins en partie le faisceau d'éclairage généré par le système d'émission 1.

Dans un mode de réalisation alternatif, le système d'émission 1 est configuré pour générer un faisceau d'éclairage à partir du faisceau de lumière initial 3. Pour cela, le séparateur 6 est apte à générer un deuxième faisceau de lumière 14 différent du premier. Ici, le deuxième faisceau de lumière 14 est polarisé dans la deuxième direction 12 de polarisation. Ici, le deuxième faisceau de lumière 14 est transmis par le séparateur 6 selon le même axe optique que le faisceau initial 3. Le deuxième faisceau polarisé 14 forme de préférence le faisceau d'éclairage généré par le système d'émission 1, au moins en partie.

Le système de de réception 10 détecte le premier faisceau lumineux 4 polarisé dans la première direction 7, et ne détecte pas le premier faisceau lumineux 4, lorsque ce dernier est polarisé dans la deuxième direction 12, ni le deuxième faisceau 14 également polarisé dans la deuxième direction 12. On obtient ainsi un faisceau d'éclairage d'intensité constante, dans lequel le premier faisceau lumineux a une direction de polarisation commutable entre les deux directions 7, 12 afin de transmettre des informations. Grâce à l'invention, le faisceau d'éclairage permet d'émettre des informations sans perdre de flux lumineux.

Dans un autre mode de réalisation, le système de réception détectent le deuxième faisceau polarisé 14 dans la deuxième direction 12 et le premier faisceau lumineux 4 polarisé dans la deuxième direction 12, et ne détectent pas le premier faisceau lumineux 4, lorsque ce dernier est polarisé dans la première direction 7. On obtient ainsi un faisceau d'éclairage d'intensité constante, dans lequel le premier faisceau lumineux a une direction de polarisation commutable entre les deux directions 7, 12 afin de transmettre des informations. Grâce à l'invention, le faisceau d'éclairage permet d'émettre des informations sans perdre de flux lumineux.

Sur la figure 2, le deuxième mode de réalisation montre un système d'émission 21 comprenant une source 22 générant un faisceau initial 23, un premier séparateur 26, un miroir 25 et du modulateur 31, qui sont disposés de la même manière que dans le premier mode de réalisation, pour obtenir un premier faisceau de lumière polarisée 24 dans une première 27 ou une deuxième direction 32 et un deuxième faisceau de lumière polarisée 34 dans la deuxième direction 32. Le deuxième mode permet de recombiner le premier faisceau de lumière polarisée 24 dans la première direction 27 et le deuxième faisceau de lumière polarisée 34 dans la deuxième direction 32. Autrement dit, les deux faisceaux 24, 32 sont sensiblement orientés selon un même axe optique.

Pour y parvenir, le système d'émission 21 comprend en plus d'un premier séparateur 26, un deuxième séparateur 36 agencé à l'intersection du premier faisceau de lumière polarisée 24 en sortie modulateur 31, et du deuxième faisceau de lumière polarisée 34. Le deuxième séparateur 36 a pour fonction de dévier le premier faisceau polarisé 24, lorsqu'il est dans la première direction de polarisation, dans la même direction que le deuxième faisceau de lumière polarisé. En revanche, le séparateur 36 laisse passer la lumière qui est polarisée dans la deuxième direction. Ainsi, lorsque le premier faisceau 24 est polarisé selon la deuxième direction 32, il traverse le séparateur sans être dévié. De même, le deuxième faisceau lumineux 34 qui arrive transversalement, traverse le séparateur 36. Le premier faisceau lumineux 24 est dévié selon le même axe optique que celui du deuxième faisceau lumineux polarisé 34, uniquement lorsqu'il est polarisé dans la première direction 27 de polarisation.

Le système d'émission 21 est ici doté d'un premier 35 et d'un deuxième 37 miroir supplémentaire. Le premier miroir 35 est agencé pour réfléchir le premier faisceau de lumière polarisé 24 vers le deuxième séparateur 36, après le modulateur 31. Le deuxième miroir 37 réfléchit le premier faisceau lumineux polarisé dans la deuxième direction 32, après la transmission à travers le deuxième séparateur, de manière à le dirigé dans une direction préférentielle.

Dans ce mode de réalisation, le faisceau d'éclairage du dispositif est formé par la recombinaison du premier faisceau de lumière 24 polarisée selon la première direction 27 et le deuxième faisceau 34 de lumière polarisée dans la deuxième direction 32. Le premier faisceau de lumière polarisée 24 dans la deuxième direction 32 est décalé. Il peut aussi servir pour former le faisceau d'éclairage afin que le faisceau d'éclairage garde une intensité constante pendant la modulation.

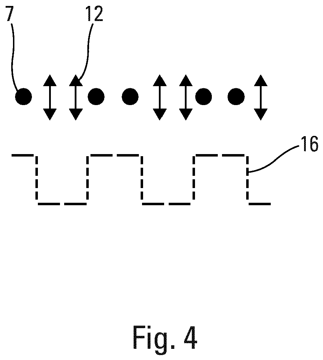

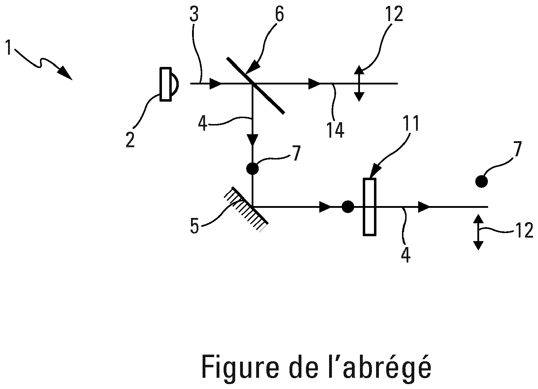

La figure 4 illustre la détection de la lumière, que reçoit le récepteur en fonction de la polarisation du premier faisceau lumineux. On obtient donc un signal de détection de la lumière, qui est ici une fonction en forme de créneaux 16, et permet de coder des informations. Lorsque la polarisation du premier faisceau lumineux est orientée selon la première direction 7, le premier faisceau traverse le filtre polarisant du récepteur pour atteindre le détecteur, et le signal a la valeur haute de la fonction créneau. Lorsque la polarisation du premier faisceau lumineux est orientée selon la deuxième direction 12, le signal a la valeur basse de la fonction en créneau, car le premier faisceau lumineux ne travers pas le filtre et le détecteur ne reçoit pas de lumière.

Ainsi, en activant le modulateur, on peut coder des informations à transmettre du système d'émission au système de réception par modulation.

Dans une première variante de réalisation, non représentée sur les figures, la source de lumière est une source de lumière polarisée, telle une source laser. La source laser permet d'obtenir directement le premier faisceau polarisé. Le faisceau initial est néanmoins séparé en deux par un séparateur afin d'obtenir un premier et un deuxième faisceau polarisé.

Alternativement, le système d'émission comprend en plus un élément de conversion de longueur d'onde agencé pour transformer le faisceau de lumière initial polarisée en un faisceau de lumière non polarisée. Un tel convertisseur de lumière comprend un matériau luminescent conçu pour absorber au moins une partie d'une lumière d'excitation émise par une source lumineuse, et pour convertir au moins une partie de ladite lumière d'excitation absorbée en une lumière d'émission ayant une longueur d'onde différente de celle de la lumière d'excitation. Comme le matériau luminescent diffuse la lumière émise et transmise, la lumière du faisceau de lumière ainsi généré est non polarisée. La modulation et la séparation sont effectuées après la conversion de longueur d'onde du faisceau initial par le convertisseur. Dans ce cas, une partie seulement du faisceau initial converti est utilisé pour la communication. On peut en outre utiliser un filtre accordé sur la longueur d'onde du laser pour augmenter le rapport signal sur bruit. Il est à noter que le faisceau initial converti est soit la lumière transmise par le matériau luminescent, soit la lumière convertie par le matériau luminescent, soit la synthèse additive de la lumière transmise et la lumière convertie par le matériau luminescent.

Dans une deuxième variante de réalisation, non représentée sur les figures, la source de lumière est une source infrarouge qui génère un faisceau de lumière initiale infrarouge. Le fonctionnement est le même que dans les réalisations précédentes.

Dans un autre mode de réalisation, non représenté sur les figures, la modulation de la polarisation du premier faisceau lumineux est associée à une modulation pulsée de l'allumage de la source de lumière. Ainsi, on peut utiliser deux canaux de communication et augmenter la capacité et la vitesse de transfert d'informations entre le système d'émission et le système de réception. La fréquence de modulation pulsée est de préférence effectuée à haute fréquence.

## Revendications

1. Dispositif lumineux de véhicule automobile, ledit dispositif comprenant un dispositif de communication, comprenant un système d'émission (1, 21) muni d'une source lumineuse (2, 22) apte à émettre un faisceau de lumière initial (3, 23), le système d'émission (1, 21) étant configuré pour générer un premier faisceau de lumière polarisée (4, 24) selon une première direction (7, 27) à partir du faisceau de lumière initial (3, 23), le système d'émission (1, 21) comportant en outre un modulateur (11, 31) de la direction de polarisation du premier faisceau de lumière polarisée (4, 24) de manière à transmettre des informations, le dispositif de communication comprenant en outre un système de réception (10) configuré pour détecter ledit premier faisceau de lumière polarisée (4, 24) lorsqu'il est polarisé selon ladite première direction (7, 27) et à transmettre lesdites informations, dans lequel le système d'émission (1, 21) est configuré pour générer un faisceau d'éclairage à partir du faisceau de lumière initial (3, 23).

2. Dispositif lumineux selon la revendication 1, dans lequel le modulateur (11, 31) comprend un écran capable de moduler la polarisation du premier faisceau de lumière polarisée entre la première direction de polarisation (7, 27) et une deuxième direction de polarisation (12, 32).

3. Dispositif lumineux selon la revendication 2, dans lequel la première (7, 27) et la deuxième (12, 32) direction de polarisation sont orthogonales.

4. Dispositif lumineux selon l'une quelconque des revendications 2 ou 3, dans lequel le modulateur (11, 31) comprend un écran à cristaux liquides commutable entre une première configuration dans laquelle le premier faisceau de lumière polarisée (4, 24) est transmis dans la première direction de polarisation (7, 27), et une deuxième configuration dans laquelle le premier faisceau de lumière polarisée (4, 24) est transmis dans la deuxième direction de polarisation (12, 32).

5. Dispositif lumineux selon la revendication 3 ou 4, dans lequel le système d'émission comprend un séparateur linéaire (6, 26) configuré pour diviser le faisceau de lumière initiale (3, 23) pour former le premier faisceau de lumière polarisée (4, 24) et un deuxième faisceau de lumière polarisée (14, 34) dans la deuxième direction de polarisation (12, 32).

6. Dispositif lumineux selon l'une quelconque des revendications précédentes, dans lequel le système d'émission (1, 21) est configuré pour que le faisceau d'éclairage (3, 23) soit en partie formé par le premier faisceau de lumière polarisée (4, 24) quelle que soit sa direction de polarisation.

7. Dispositif lumineux selon la revendication 6, dans lequel le système d'émission (1, 21) est configuré pour recombiner le premier faisceau de lumière polarisée (4, 24) dans la première direction (7, 27) et le deuxième faisceau de lumière polarisée (14, 34) de manière à former le faisceau d'éclairage.

8. Dispositif lumineux selon la revendication 7, dans lequel le système d'émission (21) comprend un deuxième séparateur (36) configuré pour réfléchir le premier faisceau de lumière polarisée (24) dans la première direction de polarisation (27), et transmettre le premier faisceau de lumière polarisée (24) dans la deuxième direction (32).

9. Dispositif lumineux selon l'une quelconque des revendications précédentes, dans lequel la source lumineuse (2, 22) est une source lumineuse non polarisée, telle une diode électroluminescente.

10. Dispositif lumineux selon l'une quelconque des revendications précédentes, dans lequel la source lumineuse (2, 22) est une source lumineuse polarisée, telle une source laser.

11. Dispositif lumineux selon la revendication 10, dans lequel le système d'émission comprend un élément de conversion de longueur d'onde agencé pour transformer le faisceau de lumière polarisée initial en faisceau de lumière non polarisé.

12. Dispositif lumineux selon l'une quelconque des revendications précédentes, dans lequel le système de réception (10) comprend un détecteur de lumière et un filtre polarisant (9) configuré pour laisser passer la lumière polarisée selon la première direction (4, 24).

## Patentansprüche

1. Beleuchtungseinrichtung für ein Kraftfahrzeug, wobei die Vorrichtung eine Kommunikationsvorrichtung umfasst, die ein Emissionssystem (1, 21) umfasst, das mit einer Lichtquelle (2, 22) versehen ist, die geeignet ist, einen Ausgangslichtstrahl (3, 23) zu emittieren, wobei das Emissionssystem (1, 21) dazu ausgestaltet ist, ausgehend von dem Ausgangslichtstrahl (3, 23) einen gemäß einer ersten Richtung (7, 27) polarisierten ersten Lichtstrahl (4, 24) zu erzeugen, wobei das Emissionssystem (1, 21) ferner einen Modulator (11, 31) der Polarisationsrichtung des polarisierten ersten Lichtstrahls (4, 24) beinhaltet, so dass Informationen übertragen werden, wobei die Kommunikationsvorrichtung ferner ein Empfangssystem (10) umfasst, das dazu ausgestaltet ist, den polarisierten ersten Lichtstrahl (4, 24) zu detektieren, wenn er gemäß der ersten Richtung (7, 27) polarisiert ist, und die Informationen zu übertragen, wobei das Emissionssystem (1, 21) dazu ausgestaltet ist, ausgehend von dem Ausgangslichtstrahl (3, 23) einen Beleuchtungsstrahl zu erzeugen.

2. Beleuchtungsvorrichtung nach Anspruch 1, bei welcher der Modulator (11, 31) eine Blende umfasst, die in der Lage ist, die Polarisation des polarisierten ersten Lichtstrahls zwischen der ersten Polarisationsrichtung (7, 27) und einer zweiten Polarisationsrichtung (12, 32) zu modulieren.

3. Beleuchtungsvorrichtung nach Anspruch 2, bei der die erste (7, 27) und die zweite (12, 32) Polarisationsrichtung rechtwinklig zueinander sind.

4. Beleuchtungsvorrichtung nach einem der Ansprüche 2 oder 3, bei welcher der Modulator (11, 31) eine Flüssigkristallblende umfasst, die zwischen einer ersten Anordnung, in welcher der polarisierte erste Lichtstrahl (4, 24) in der ersten Polarisationsrichtung (7, 27) übertragen wird, und einer zweiten Anordnung, in welcher der polarisierte erste Lichtstrahl (4, 24) in der zweiten Polarisationsrichtung (12, 32) übertragen wird, umschaltbar ist.

5. Beleuchtungsvorrichtung nach Anspruch 3 oder 4, bei der das Emissionssystem einen linearen Separator (6, 26) umfasst, der dazu ausgestaltet ist, den Ausgangslichtstrahl (3, 23) zu teilen, um den polarisierten ersten Lichtstrahl (4, 24) und einen in der zweiten Polarisationsrichtung (12, 32) polarisierten zweiten Lichtstrahl (14, 34) zu bilden.

6. Beleuchtungsvorrichtung nach einem der vorhergehenden Ansprüche, bei der das Emissionssystem (1, 21) dazu ausgestaltet ist, dass der Beleuchtungsstrahl (3, 23) zum Teil durch den polarisierten ersten Lichtstrahl (4, 24) gebildet wird, unabhängig von dessen Polarisationsrichtung.

7. Beleuchtungsvorrichtung nach Anspruch 6, bei der das Emissionssystem (1, 21) dazu ausgestaltet ist, den in der ersten Richtung (7, 27) polarisierten ersten Lichtstrahl (4, 24) und den polarisierten zweiten Lichtstrahl (14, 34) so zu rekombinieren, dass der Beleuchtungsstrahl gebildet wird.

8. Beleuchtungsvorrichtung nach Anspruch 7, bei der das Emissionssystem (21) einen zweiten Separator (36) umfasst, der dazu ausgestaltet ist, den in der ersten Polarisationsrichtung (27) polarisierten ersten Lichtstrahl (24) zu reflektieren und den in der zweiten Richtung (32) polarisierten ersten Lichtstrahl (24) zu übertragen.

9. Beleuchtungsvorrichtung nach einem der vorhergehenden Ansprüche, bei der die Lichtquelle (2, 22) eine nicht polarisierte Lichtquelle wie eine Leuchtdiode ist.

10. Beleuchtungsvorrichtung nach einem der vorhergehenden Ansprüche, bei der die Lichtquelle (2, 22) eine polarisierte Lichtquelle wie eine Laserquelle ist.

11. Beleuchtungsvorrichtung nach Anspruch 10, bei der das Emissionssystem ein Wellenlängenkonversionselement umfasst, das dazu eingerichtet ist, den polarisierten Ausgangslichtstrahl in einen nicht polarisierten Lichtstrahl umzuwandeln.

12. Beleuchtungsvorrichtung nach einem der vorhergehenden Ansprüche, bei der das Empfangssystem (10) einen Lichtdetektor und einen polarisierenden Filter (9) umfasst, der dazu ausgestaltet ist, das gemäß der ersten Richtung (4, 24) polarisierte Licht durchzulassen.

## Claims

1. Lighting device for a motor vehicle, said comprising a communication device, comprising a transmission system (1, 21) equipped with a light source (2, 22) designed to emit an initial light beam (3, 23), the transmission system (1, 21) being configured for generating a first light beam (4, 24) polarized in a first direction (7, 27) starting from the initial light beam (3, 23), the transmission system (1, 21) furthermore comprising a modulator (11, 31) of the direction of polarization of the first polarized light beam (4, 24) in such a manner as to transmit information, the device furthermore comprising a receiver system (10) configured for detecting the said first polarized light beam (4, 24) when it is polarized in said first direction (7, 27) and for transmitting the said information, in which the transmission system (1, 21) is configured for generating a lighting beam starting from the initial light beam (3, 23) .

2. Lighting device according to Claim 1, in which the modulator (11, 31) comprises a screen capable of modulating the polarization of the first polarized light beam between the first direction of polarization (7, 27) and a second direction of polarization (12, 32).

3. Lighting device according to Claim 2, in which the first (7, 27) and the second (12, 32) direction of polarization are orthogonal.

4. Lighting device according to either one of Claims 2 and 3, in which the modulator (11, 31) comprises a liquid crystal screen switchable between a first configuration in which the first polarized light beam (4, 24) is transmitted in the first direction of polarization (7, 27), and a second configuration in which the first polarized light beam (4, 24) is transmitted in the second direction of polarization (12, 32).

5. Lighting device according to either of Claims 3 and 4, in which the transmission system comprises a linear separator (6, 26) configured for dividing the initial light beam (3, 23) so as to form the first polarized light beam (4, 24) and a second light beam (14, 34) polarized in the second direction of polarization (12, 32) .

6. Lighting device according to any one of the preceding claims, in which the transmission system (1, 21) is configured so that the lighting beam (3, 23) is in part formed by the first polarized light beam (4, 24) irrespective of its direction of polarization.

7. Lighting device according to Claim 6, in which the transmission system (1, 21) is configured for recombining the first light beam (4, 24) polarized in the first direction (7, 27) and the second polarized light beam (14, 34) in such a manner as to form the lighting beam.

8. Lighting device according to Claim 7, in which the transmission system (21) comprises a second separator (36) configured for reflecting the first light beam (24) polarized in the first direction of polarization (27), and transmitting the first light beam (24) polarized in the second direction (32).

9. Lighting device according to any one of the preceding claims, in which the light source (2, 22) is an unpolarized light source, such as a light-emitting diode.

10. Lighting device according to any one of the preceding claims, in which the light source (2, 22) is a polarized light source, such as a laser source.

11. Lighting device according to Claim 10, in which the transmission system comprises a wavelength conversion element configured for transforming the polarized initial light beam into an unpolarized light beam.

12. Lighting device according to any one of the preceding claims, in which the receiver system (10) comprises a photodetector and a polarizing filter (9) configured for allowing the light polarized in the first direction (4, 24) to pass.
